# EUROPÄISCHE PATENTSCHRIFT

(11) **EP 1 976 451 B1**
(45) Veröffentlichungstag und Bekanntmachung des Hinweises auf die Patenterteilung: **04.08.2010**
(21) Anmeldenummer: 06829546.8
(22) Anmeldetag: 13.12.2006
(51) Int. Cl.: A61C 17/40

(54) **ELEKTRISCHE ZAHNBÜRSTE**
ELECTRIC TOOTHBRUSH
BROSSE A DENTS ELECTRIQUE

(30) Priorität: 27.01.2006 DE 102006004146
(43) Veröffentlichungstag der Anmeldung: 08.10.2008
(73) Patentinhaber: Braun GmbH, 61476 Kronberg im Taunus (DE)
(72) Erfinder: SCHWARZ-HARTMANN, Armin, 55234 Wendelsheim (DE); HAAS, Martin, 65760 Eschborn (DE); RINGELMANN, Manfred, 97653 Bischofsgeim/Rhön (DE); JUNG, Philipp, 64347 Griesheim (DE); SCHMID, Michael, 60599 Frankfurt/Main (DE); BORNHEIMER, Heiko, 65205 Wiesbaden (DE); FRITSCH, Thomas, 65817 Eppstein (DE)
(86) Internationale Anmeldenummer: PCT/EP2006/011969
(87) Internationale Veröffentlichungsnummer: WO 2007/085289

(56) Entgegenhaltungen:
- WO-A-03/005924
- US-A- 3 196 299
- US-A- 3 967 617

## Beschreibung

Die vorliegende Erfindung betrifft eine elektrische Zahnbürste, insbesondere das Handteil einer elektrischen Zahnbürste, das ein Gehäuse, einen Übertrager und einen Antrieb aufweist, der über eine Federeinrichtung elastisch am Gehäuse gelagert und in mindestens einer Bewegungsebene vorzugsweise quer zur Zahnbürstenlängsachse oszillierend bewegbar ist. Der Übertrager ist mit dem Antrieb verbunden, und dient zur Übertragung der Bewegung des Antriebs auf einen auf den Übertrager aufsteckbaren Bürstenkopf.

In der WO 03/005924 A1 ist eine elektrische Zahnbürste beschrieben, bei der ein Motor in einer Motorhalterung gehaltert ist, wobei die Motorhalterung aus Gummi oder einem Elastomer hergestellt ist und dazu ausgestaltet ist, eine elliptische Bewegung einer Achsspitze des Motors zu erzeugen, indem die Motorhalterung nicht kreisförmig geformt ist, sondern parallele laterale Kanten und gekrümmte Front- und Hinterkanten hat.

Eine weitere Zahnbürste, bei der der gesamte Antriebsmotor vibriert und diese Vibrationen auf den Bürstenkopf übertragen werden, ist aus der US 3,196,299 bekannt. Der Antriebsmotor treibt eine Unwucht in Form eines exzentrisch gelagerten Massestücks an und bildet zusammen mit dieser Unwucht einen Vibrationsantrieb. Der Antriebsmotor ist in einem Chassis gelagert, welches über eine Feder beweglich am Gehäuse der Zahnbürste gelagert ist. Die Vibrationen des Antriebs werden auf einen im Gehäuse beweglichen Übertragerstab übertragen, auf den ein Aufsteckbürstchen aufsteckbar ist. Die Feder ist stirnseitig zwischen entsprechende Absätze des Chassis und des Gehäuses eingespannt, und sitzt an einer Durchtrittsöffnung des Gehäuses zwischen dem Aufsteckbürstchen und dem Antriebsmotor. Dabei ist ein relativ aufwendiger Schraubmechanismus zur Veränderung der Federvorspannung vorgesehen, um die Stärke der Vibrationen bzw. der Bewegungsamplitude des Antriebs verstellen und an die jeweiligen Bedürfnisse verschiedener Benutzer einstellen zu können. Trotz dieser Einstellbarkeit ist bei derartigen Vibrationsantrieben bislang unbefriedigend, dass die entstehende Bürstenkopfbewegung ein zu starkes Stochern ausführt, während andererseits die Wischbewegungen parallel zu den Zahnflanken zu schwach sind. Neben begrenzter Effizienz kann dies zu einem unangenehmen Anwendungsempfinden beim Benutzer führen.

Der vorliegenden Erfindung liegt die Aufgabe zugrunde, eine verbesserte elektrische Zahnbürste, insbesondere ein verbessertes Handteil einer elektrischen Zahnbürste, zu schaffen, der Nachteile des Standes der Technik vermeidet und letzteren in vorteilhafter Weise weiterbildet.

Erfindungsgemäß wird diese Aufgabe durch ein Handteil gemäß Anspruch 1 gelöst. Bevorzugte Ausgestaltungen der Erfindung sind Gegenstand der abhängigen Ansprüche.

Erfindungsgemäß wird also vorgeschlagen, die Richtung der erzeugten Antriebsbewegung des elastisch aufgehängten Antriebs und damit der hierdurch erzeugten Putzbewegung des Bürstenkopfes der Zahnbürste gezielt zu steuern, insbesondere der genannten Antriebsbewegung in verschiedenen Richtungen verschiedene Amplituden zu geben. Die Federeinrichtung besitzt Federarme, über die der Antrieb elastisch an dem Gehäuse gelagert ist, und die in zwei vorzugsweise zueinander senkrechten Richtungen in der Bewegungsebene des Antriebs unterschiedliche Federkonstanten besitzen, sodaß die Antriebsbewegung des Antriebs in den genannten Richtungen unterschiedliche Amplituden erhält. Auf diese Weise kann eine Anpassung der Vibrationsstärke in verschiedene Putzrichtungen erreicht werden. Erfindungsgemäß besitzt die Federeinrichtung einen zentralen Befestigungsabschnitt, der über zwei im Wesentlichen L-förmig ausgebildete Federarme mit einem äußeren Befestigungsabschnitt verbunden ist, und die beiden Schenkel eines jeden Federarms unterschiedlich lang ausgebildet sind. Dies bewirkt eine Verschiedenheit der Federkonstanten.

Insbesondere kann hierbei in Weiterbildung der Erfindung die Stärke von Stocherbewegungen des Bürstenkopfes, d.h. Bewegungen im wesentlichen in Richtung der Borsten des Borstenkopfes, reduziert werden, während vergleichsweise die Stärke von Wischbewegungen, d.h. Bewegungen der Borsten parallel zu den Zahnflanken, vergleichsweise verstärkt werden.

Insbesondere kann in Weiterbildung der Erfindung die Federeinrichtung bezüglich einer Bewegungsachse, die in Stocherbewegungen des Bürstenkopfes umsetzbar ist, eine härtere Federkonstante besitzen als bezüglich einer Bewegungsachse, die Wischbewegungen des Bürstenkopfes entlang der Zahnflanken bewirkt.

Vorteilhafterweise werden die Federeinrichtung, insbesondere deren Federkonstanten in den zueinander senkrechten Richtungen, sowie die Antriebsfrequenz des Antriebs derart aufeinander abgestimmt, dass der Antrieb eine im wesentlichen elliptische, ggf. auch näherungsweise ovale Antriebsbewegung oder auch allgemein eine Antriebsbewegung in Form eines flachgedrückten Kreises ausführt.

Vorteilhafterweise jedoch besitzt der Antrieb Einstellmittel zur Einstellung seiner Antriebsfrequenz, so dass die Antriebsfrequenz auf die jeweilige Federeinrichtung abstimmbar ist, um Fertigungstoleranzen im Antrieb und/oder der Federeinrichtung und daraus resultierenden Abweichungen der Vibrationsfrequenz auszugleichen.

In Weiterbildung der Erfindung ist die Aufhängung, insbesondere deren Federeinrichtung, sowie die Ausbildung des Antriebs selbst derart ausgestaltet, dass die Amplitude der Antriebsbewegung in einer ersten Richtung vorzugsweise zumindest fünfmal so groß ist als die Amplitude der Antriebsbewegung in eine dazu senkrechte zweite Richtung. Wird die vorgenannte elliptische Vibrations- bzw. Oszillationsbewegung des Antriebes vorgesehen, kann die Längsachse der Bewegungsellipse zumindest fünfmal, vorzugsweise mehr als zehnmal länger als die Querachse der Bewegungsellipse sein.

Die Federeinrichtung muss nicht zwangsweise entsprechend der Oszillationsbewegung des Antriebs ausgerichtet sein. In Weiterbildung der Erfindung jedoch besitzt die Federeinrichtung zwei Hauptachsen mit verschiedenen Federkonstanten, die beide in einer Ebene quer zur Zahnbürstenlängsachse liegen, die gleichzeitig die Bewegungsebene des Antriebs sein kann.

Die Federeinrichtung kann insbesondere etwa scheiben- bzw. plattenförmig ausgebildet sein. Die Federeinrichtung kann vorteilhafterweise im wesentlichen senkrecht zur Zahnbürstenlängsachse im Gehäuse der Zahnbürste aufgenommen sein.

Um die Montage zu erleichtern und zwangsweise die gewünschte Ausrichtung der Federeinrichtung und damit die richtige Orientierung der unterschiedlichen Federhärten in verschiedenen Richtungen zu erreichen, kann die Federeinrichtung eine Orientierungscodierung besitzen, durch die die Federeinrichtung in einer vorbestimmten Ausrichtung im Gehäuse montierbar ist. Die Orientierungscodierung und/oder der zugehörige Gehäuseabschnitt können dabei derart ausgebildet sein, dass die Federeinrichtung in nur einer einzigen vorbestimmten Ausrichtung montierbar ist. Hierdurch kann beispielsweise sichergestellt werden, dass die kleinere Amplitude der Antriebsbewegung in Stocherrichtung auftritt, während die größere Amplitude der Antriebsbewegung in Wischrichtung auftritt. Gegebenenfalls könnte die Orientierungscodierung an der Federeinrichtung und/oder dem zugehörigen Gehäuseabschnitt, an dem die Federeinrichtung montierbar ist, mehrere vorbestimmte Montagestellungen zulassen, um ggf. eine Umstellung der Richtung zu erlauben, in der die größere Amplitude bzw. die kleinere Amplitude auftritt, beispielsweise für verschiedene Anwendungsfälle. Bevorzugt ist jedoch die zuvor beschriebene Ausführung, bei der die Federeinrichtung in einer einzigen vorbestimmten Ausrichtung montierbar ist.

Insbesondere kann die Federeinrichtung einen Befestigungsträger, vorzugsweise Rahmen, aufweisen, welcher die entsprechende Orientierungscodierung besitzt. Der Rahmen kann dabei eine geeignete Abweichung von der Rotationssymmetrie besitzen, die sicherstellt, dass die Feder in der gewünschten Richtung montiert wird.

Vorteilhafterweise kann der genannte Befestigungsträger, insbesondere -rahmen, integral einstückig an der vorgenannten Labyrinthfeder angeformt sein. Nach einer besonders vorteilhaften Ausführung der Erfindung kann die Federeinrichtung ein Blechstanzteil bilden, wobei ggf. mehrere solche vorzugsweise kongruenten Blechstanzteile übereinander stapelbar sind, die sozusagen ein Federpaket bilden.

In Weiterbildung der Erfindung ist der Antrieb nicht allein durch die genannte Federeinrichtung aufgehängt, sondern zusätzlich noch durch einen weiteren Anlenkpunkt mit dem Gehäuse verbunden. Insbesondere kann in Weiterbildung der Erfindung der Übertrager und/oder der damit verbundene Antrieb durch ein Lager, vorzugsweise eine elastische Hülse, mehrachsig schwenkbar am Gehäuse angelenkt sein. Das Lager bildet dabei vorteilhafterweise eine kugelgelenkartige gehäusefeste Anlenkung, so dass der Übertrager und/oder der damit verbundene Antrieb nach Art einer räumlichen Wippe auf einer kegelförmigen Umlaufbahn taumelnd bewegbar ist. Es versteht sich dabei, dass die kegelförmige Umlaufbahn keinen Kreisquerschnitt besitzen muss, sondern vorteilhafterweise in der zuvor beschriebenen Weise einen elliptischen Kegel bildet.

Insbesondere ist der Übertrager an einem Mittel- bzw. Zwischenabschnitt in der genannten Weise kugelgelenkartig angelenkt, so dass der Übertrager eine doppelkegelförmige Umlaufbahn beschreibt, wenn er von dem Antrieb in Bewegung gesetzt wird. Der Übertrager kann dabei durch eine stirnseitige Öffnung in dem Gehäuse des Handteils durch das Gehäuse hindurchtreten und stirnseitig aus dem Handteil herausragen, wobei das Lager vorteilhafterweise im Bereich der Durchtrittsöffnung angeordnet ist. Auf den heraustretenden Teil des Übertragers kann vorteilhafterweise ein Bürstenkopf, insbesondere ein Austauschbürstchen, gesetzt werden bzw. angekuppelt werden. Der im Inneren des Gehäuses befindliche Abschnitt des Übertragers ist vorteilhafterweise starr mit dem Antrieb bzw. einem den Antrieb lagernden Antriebschassis verbunden, an dem wiederum die vorgenannte Federeinrichtung angreift.

In Weiterbildung der Erfindung ist dabei die Federeinrichtung auf der dem Lager gegenüberliegenden Seite des Antriebschassis angeordnet. Grundsätzlich wäre zwar auch denkbar, die Federeinrichtung zwischen dem genannten Lager und dem Antrieb anzuordnen. Vorteilhafterweise jedoch sitzt die Federeinrichtung auf der dem Übertrager abgewandten Seite des Antriebs. Hierdurch erhält die Federeinrichtung einen größeren Hebelarm bezüglich des Lagers, das die kegel- bzw. doppelkegelförmige Bewegungsbahn des Übertragers definiert. Dementsprechend kann mit geringen Federkräften eine effektive Steuerung der Antriebsbewegung erreicht werden und eine kleinbauende, leichte Federeinrichtung verwendet werden.

Als Antrieb ist nach einer vorteilhaften Ausführung der Erfindung ein Elektromotor mit einer Unwucht vorgesehen, die von einer exzentrisch angeordneten Masse gebildet sein kann. Die Unwucht wird rotatorisch angetrieben, wodurch eine oszillierende Vibrationsbewegung erzielt wird.

Um eine präzise Übertragung der Federkräfte auf den Antrieb zu erreichen, ist in Weiterbildung der Erfindung die Federeinrichtung mit dem Antrieb bzw. einem diesen lagernden Antriebschassis kraft- und/oder formschlüssig vorteilhafterweise wackelfrei verbunden. Hierbei kann insbesondere eine Vernietung der Federeinrichtung mit dem Antrieb bzw. dessen Antriebschassis vorgesehen sein.

Aufgrund der beweglichen Lagerung des gesamten Antriebs und der entsprechenden Relativbewegung zwischen Gehäuse und Antrieb müssen die Übertragungsmittel der Energieversorgung und/oder der Steuerung die entsprechenden Bewegungen zulassen. Grundsätzlich wären hier elastische Leitungen oder ggf. auch Gleit- bzw. Schleifkontakte möglich. Die Stromversorgung des Antriebs und/oder die Steuervorrichtung für denselben besitzt in Weiterbildung der Erfindung gehäusefeste Anschlußstellen zum Anschließen des beweglich gelagerten Antriebs in unmittelbarer Nähe des Lagers, über welches der Übertrager bzw. der Antrieb am Gehäuse angelenkt ist. In unmittelbarer Nähe dieses Anlenkpunktes treten nahezu keine Relativbewegungen auf, da dies sozusagen die Wurzel der doppelkegelförmigen Bewegungsbahn des Antriebs bzw. des damit verbundenen Übertragers ist. Die gehäusefesten Anschlußstellen der Stromversorgung und der Steuervorrichtung liegen also in einem Bereich, in dem die Bewegungsamplitude des Antriebsstrangs sehr klein ist.

Besonders vorteilhaft ist hierbei die Ausbildung der Übertragungsmittel in Form von Blechstreifen, die die elektrischen Anschlüsse des Motors mit den gehäusefesten Anschlußstellen verbinden. Die Blechstreifen lassen die genannten Bewegungen zu, die an der genannten Lagerstelle im wesentlichen aus Winkelversatz bestehen. Insbesondere kann der Antrieb über die genannten Blechstreifen an einer Schaltungsplatine angeschlossen sein, welche sich bis in die Nähe des Lagers des Übertragers erstreckt.

Die vorliegende Erfindung wird nachfolgend anhand eines bevorzugten Ausführungsbeispiels und zugehöriger Zeichnungen näher erläutert. In den Zeichnungen zeigen:

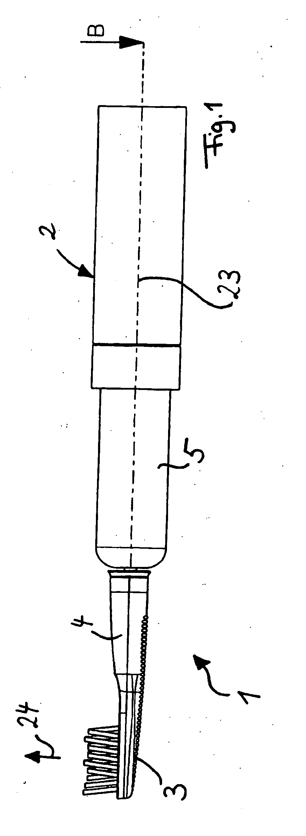

- Fig. 1:: eine schematische Seitenansicht einer elektrischen Zahnbürste mit einem Handteil und einer darauf aufsteckbaren Aufsteckbürste nach einer vor- teilhaften Ausführung der Erfindung,
- Fig. 2:: einen Längsschnitt durch das Handteil der elektrischen Zahnbürste aus Fig. 1 entlang der Linie B-B in Fig. 1,
- Fig. 3:: einen Längsschnitt des Handteils aus den vorhergehenden Figuren ent- lang der Linie A-A in Fig. 2,
- Fig. 4:: eine schematische Frontansicht des Bürstenkopfes der Zahnbürste aus Fig. 1, die die Bewegungsbahn des Bürstenkopfes verdeutlicht,
- Fig. 5:: einen Querschnitt durch das Handteil der Zahnbürste entlang der Linie F- F in Fig. 2, der die Aufhängung des Antriebs über eine Labyrinthfeder am Gehäuse zeigt, und
- Fig. 6:: eine vergrößerte Draufsicht auf die Federeinrichtung der Aufhängung des Antriebs der Zahnbürste aus den vorhergehenden Figuren.

Die in den Figuren gezeigte elektrische Zahnbürste 1 umfasst ein Handteil 2, an dem ein Bürstenkopf 3 ankuppelbar ist, wobei in der gezeichneten Ausführung der Bürstenkopf 3 ein Bürstenrohr 4 umfasst, mit Hilfe dessen der Bürstenkopf 3 auf das Handteil 2 aufgesteckt werden kann.

Das Handteil 2 umfasst dabei ein im wesentlichen rohrförmiges Gehäuse 5, das einen elektrischen Antrieb 6 sowie eine Energieversorgungsquelle, insbesondere in Form einer Batterie oder eines Akkus hierfür, aufnimmt sowie nicht näher dargestellte Betätigungs- und Steuerungselemente aufweisen kann.

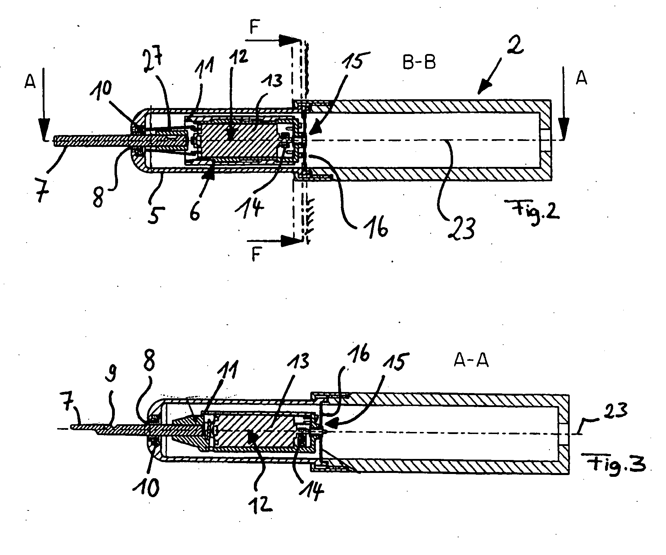

Wie die Figuren 2 und 3 zeigen, ist der Antrieb 6 im vorderen Teil des Innenraums des Gehäuses 5 des Handteils 2 angeordnet und umfasst dabei einen Übertrager 7 in Form einer starren Stange, welche stirnseitig durch eine Durchtrittsöffnung 8 aus dem Gehäuse 5 herausragt. Auf den herausragenden Teil des Übertragers 7 kann der vorgenannte Büstenkopf 3 mit seinem Bürstenrohr 4 aufgesteckt werden, wobei der Übertrager 7 und der Bürstenkopf 3 geeignete Kupplungsmittel 9, beispielsweise in Form von Rastverbindungsmitteln, aufweisen, um den Bürstenkopf 3 dreh- und biegefest mit dem Übertrager 7 zu verbinden.

Der Übertrager 7 ist dabei im Bereich der Durchtrittsöffnung 8 in einer elastischen Hülse 10 gelagert, welche in der genannten Durchtrittsöffnung 8 sitzt. Diese Hülse 10 bildet ein kugelgelenkartiges Schwenklager, welches räumliche Vibrationsbewegungen des Übertragers 7 relativ zum Gehäuse 5 erlaubt, den Übertrager 7 jedoch axial weitgehend festlegt. Insbesondere erlaubt die Hülse 10 eine doppelkegelförmige Bewegungsbahn des Übertragers 7, deren aufeinander stehende Kegelspitzen im Bereich der Hülse 10 liegen.

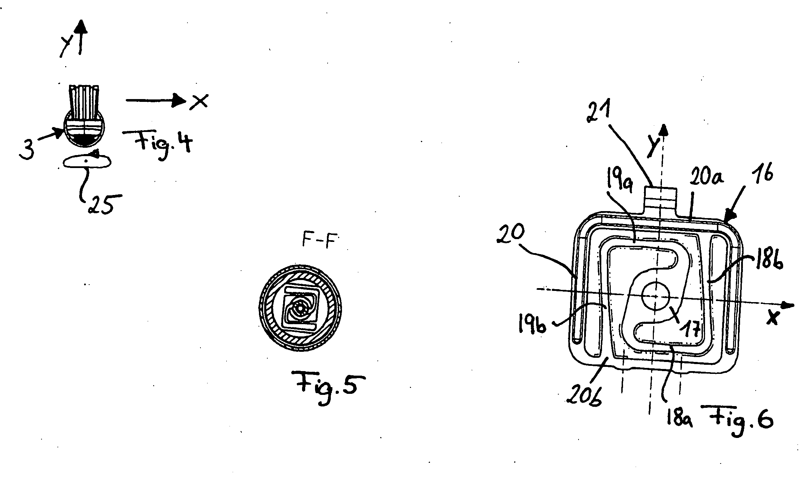

Mit dem genannten Übertrager 7 ist ein Antriebschassis 11 fest, insbesondere biegefest und vorzugsweise starr verbunden, so dass der Übertrager 7 dieselben Bewegungen ausführt wie das Antriebschassis 11. Das Antriebschassis 11 trägt den eigentlichen Antrieb 12, der in der gezeichneten Ausführungsform aus einem Elektromotor 13 mit einer Unwucht 14 in Form einer exzentrisch auf der Motorwelle angeordneten Masse besteht. Das dem Übertrager 7 abgewandten Ende des Antriebschassis 11 ist über eine Federeinrichtung 15 elastisch am Gehäuse 5 aufgehängt. Vorzugsweise besteht die Federeinrichtung 15 aus der in Figur 6 näher gezeigten Labyrinthfeder 16.

Die Feder 16 besitzt dabei in der gezeichneten Ausführung einen zentralen Befestigungsabschnitt 17, der über Federarme 18 und 19 an einem äußeren Befestigungsabschnitt 20 angelenkt ist, so dass der zentrale Befestigungsabschnitt 17 gegenüber dem äußeren Befestigungsabschnitt 20 unter Verformung der Federarme 18 und 19 bewegbar ist. Der zentrale Befestigungsabschnitt 17 wird dabei vorteilhafterweise starr, insbesondere kraft- und formschlüssig, am Antrieb 12, insbesondere der Stirnseite des Antriebschassis 11, befestigt. Hierbei könnte grundsätzlich eine Schraubverbindung vorgesehen sein. Vorzugsweise jedoch ist die Feder 16 mit dem Antriebschassis 11 vernietet.

Andererseits ist die Feder 16 mit ihrem äußeren Befestigungsabschnitt 20 fest im Gehäuse 5 eingespannt. Wie Figur 6 zeigt, besteht der Befestigungsabschnitt 20 aus einem umlaufenden, im wesentlichen rechteckigen Befestigungsrahmen, an dessen gegenüberliegenden Schenkeln 20a und 20b die vorgenannten Federarme 18 und 19 befestigt sind. Wie die Figuren 2 und 3 zeigen, kann der genannte Befestigungrahmen 20 zwischen zwei Abschnitten des Gehäuses 5 eingespannt sein. Beispielsweise kann der Befestigungsrahmen 20 zwischen die Stoßstellen der aufeinander schraubbaren Gehäusehälften eingespannt werden.

Vorteilhafterweise umfasst dabei der Befestigungsrahmen 20 eine Orientierungscodierung 21, die mit einer Orientierungscodierung am Gehäuse 5 zusammenwirkt, so dass die Federeinrichtung 15 in einer vorbestimmten Ausrichtung relativ zum Gehäuse zu montieren ist. Als Orientierungscodierung 21 können dabei geeignete Asymmetrien dienen. In der gezeichneten Ausführung besteht die Orientierungscodierung 21 aus einem lappenförmigen Vorsprung an dem Befestigungsrahmen 20 sowie einer zugehörigen Aussparung im Gehäuse. Der genannte lappen- bzw. nasenförmige Vorsprung kann in die zugehörige Aussparung im Gehäuse 5 eingreifen, so dass die Ausrichtung der Federeinrichtung 15, insbesondere die rotatorische Ausrichtung bezüglich der Zahnbürstenlängsachse 23, festgelegt ist.

Die Federeinrichtung 15 besitzt nämlich in unterschiedlichen Achsen unterschiedliche Federkonstanten bzw. -härten. Wie Figur 6 zeigt, sind die Federarme 18 und 19 jeweils im wesentlichen L-förmig ausgebildet, wobei die beiden Schenkel eines jeden Federarms 18 und 19 unterschiedlich lang ausgebildet sind. Dabei sind die beiden Federarmabschnitte 18a und 19a, die sich jeweils im wesentlichen parallel zur X-Achse erstrecken, kürzer ausgebildet als die Federarmabschnitte 18b und 19b, die sich im wesentlichen parallel zu der Y-Achse und damit im wesentlichen senkrecht zu den vorgenannten Federarmabschnitten 18a und 19a erstrecken. Damit besitzt die in Figur 6 gezeigte Feder 16 in Richtung der X-Achse eine geringere Federhärte als in Richtung der Y-Achse, d.h. der an dem zentralen Befestigungsabschnitt 17 angelenkte Antrieb 6 ist in Richtung der X-Achse (vgl. Figur 6) leichter und weiter auslenkbar als in Richtung der Y-Achse. Der Unterschied in den Federkonstanten bezüglich der X-Achse und der Y-Achse der Feder 16 kann grundsätzlich verschieden gewählt sein und ist vorzugsweise an die Ausbildung und Antriebsfrequenz des Antriebs 6 angepasst. Vorteilhafterweise kann die Federhärte der Feder 16 in Richtung der Y-Achse um zumindest 25 % größer sein als die Federhärte in X-Richtung.

Bei der über die Orientierungscodierung vorgegebenen Einbauausrichtung der Federeinrichtung 15 ist dabei vorteilhafterweise die größere Federhärte in der Richtung vorgesehen, die der Stocherrichtung bzw. der Hauptrichtung 24 der Borsten des Bürstenkopfs 3 entspricht, während die weichere Federhärte in Richtung der X-Achse sich im wesentlichen senkrecht zu der Zahnbürstenlängsachse 23 und der vorgenannten Hauptrichtung 24 der Borsten des Bürstenkopfs 3 erstreckt. Zur Verdeutlichung der Anordnung ist in Figur 4, die den Bürstenkopf 3 in Frontansicht zeigt, die Ausrichtung der X- und Y-Achsen der Federeinrichtung 15 eingezeichnet.

Durch die hierdurch erreichte, in verschiedenen Richtungen unterschiedlich harte Aufhängung des Antriebs 6 beschreibt dieser, von der Unwucht 14 angeregt, eine im wesentlichen elliptische Bewegungsbahn 25 (vgl. Figur 4), deren Längsachse vorzugsweise etwa zehn- bis dreißigmal, vorzugsweise etwa zwanzigmal, größer ist als deren Querachse (vgl. Figur 4). Die größere Amplitude tritt dabei im wesentlichen in der vorgenannten X-Richtung auf, während die kleinere Amplitude der Oszillationsbewegung in der vorgenannten Y-Richtung auftritt. Damit erhält das Borstenfeld auf dem Bürstenkopf 3 nur eine geringfügige Stocherbewegung entsprechend der Oszillation in Y-Richtung sowie eine größere Wischbewegung parallel zu den Zahnflanken mit einer größeren Amplitude entsprechend der Oszillation in X-Richtung. Die in Figur 4 dargestellte elliptische Bewegungsbahn kann auch eine andere Winkellage bezüglich der x- bzw. y-Achse einnehmen, jedoch sollte trotzdem die Stocherbewegung in y-Richtung wesentlich kleiner sein als die Wischbewegung in x-Richtung.

Wie aus den Figuren 2 und 3 ersichtlich ist, wird die Vibrationsbewegung des Antriebs 6 entlang der in Figur 4 gezeigten elliptischen Bewegungsbahn in eine Taumelbewegung des Übertragers 7 auf einem Doppelkegel umgesetzt, dessen aufeinander stehende Spitzen im Bereich der Lagerhülse 10 liegen. Es versteht sich, dass entsprechend der Hebelverhältnisse die umlaufende Oszillationsbewegung des Bürstenkopfs 3 größer sein kann als die Oszillationsbewegung des Antriebs 6.

Vorteilhafterweise ist die Antriebsfrequenz des Antriebs 6 an die Federkonstanten der jeweils verwendeten Federeinrichtung 15 angepaßt, um Fertigungstoleranzen der Feder und des Antriebs auszugleichen, sodaß sich in der gewünschten Weise die elliptische Oszillationsbewegung ergibt. Zur Einstellung der Drehzahl bzw. Antriebsfrequenz des Antriebs 6 kann dieser über eine einstellbare Spannungs-Stabilisationsschaltung angesteuert werden, mit Hilfe derer die Versorgungsspannung des Elektromotor 13 auf den richtigen Wert einstellbar und stabilisierbar ist.

Die Stromversorgung und Ansteuerung des Elektromotors .13 erfolgt dabei vorteilhafterweise nicht über herkömmliche Drähte, sondern Blechstreifen 27, die von den Motoranschlüssen zu gehäusefesten Anschlüssen 28 führen, die vorteilhafterweise im Bereich der Lagerhülse 10 und damit in dem Bereich liegen, in dem die Bewegungsamplitude des Übertragers 7 sehr klein, d.h. praktisch gleich Null ist. Insbesondere kann an der Stirnseite des Gehäuses 5 im Bereich der dort vorgesehenen Durchtrittsöffnung 8 eine Leiterplatte mit den gehäusefesten Anschlüssen 28 vorgesehen sein, an die die Blechstreifen 27 angeschlossen sind.

## Patentansprüche

1. Handteil einer elektrischen Zahnbürste (1), mit einem Gehäuse (5), einem Antrieb (6), der über eine Federeinrichtung (15) elastisch an dem Gehäuse (5) gelagert und in mindestens einer Bewegungsebene vorzugsweise quer zur Zahnbürstenlängsachse (23) oszillierend bewegbar ist, sowie mit einem mit dem Antrieb (6) verbundenen Übertrager (7) zur Übertragung der Antriebsbewegung auf einen Bürstenkopf (3), wobei die Federeinrichtung (15) in zwei verschiedenen Richtungen in der genannten Bewegungsebene des Antriebs (6) unterschiedliche Federkonstanten aufweist, sodaß die Oszillationsbewegung des Bürstenkopfs (3) in den genannten Richtungen unterschiedliche Amplituden erhält, **dadurch gekennzeichnet, daß** die Federeinrichtung (15) einen zentralen Befestigungsabschnitt (17) besitzt, der über zwei im Wesentlichen L-förmig ausgebildete Federarme (18, 19) an einem äußeren Befestigungsabschnitt (20) angelenkt ist, und die beiden Schenkel eines jeden Federarms (18; 19) unterschiedlich lang ausgebildet sind.

2. Handteil nach dem vorhergehenden Anspruch, wobei die Federeinrichtung (15) und die Antriebsfrequenz des Antriebs (6) derart aufeinander abgestimmt sind, dass der Bürstenkopf (3) eine elliptische Antriebsbewegung ausführt.

3. Handteil nach dem vorhergehenden Anspruch, wobei der Antrieb (6) entlang einer elliptischen Bewegungsbahn, deren Längsachse zumindest fünfmal, vorzugsweise mehr als zehnmal länger als die Querachse ist, bewegbar ist.

4. Handteil nach einem der vorhergehenden Ansprüche, wobei der Antrieb (6) Einstellmittel zur Einstellung seiner Antriebsfrequenz aufweist, vorzugsweise eine einstellbare Spannungs-Stabilisationsschaltung aufweist.

5. Handteil nach einem der vorhergehenden Ansprüche, wobei die Antriebsbewegung des Antriebs (6) in Richtung einer Stocherbewegung des Bürstenkopfs (3) eine kleinere Amplitude besitzt als in einer dazu senkrechten Querrichtung.

6. Handteil nach einem der vorhergehenden Ansprüche, wobei die Federeinrichtung (15) zwei Hauptachsen mit verschiedenen Federkonstanten aufweist, die beide in einer Ebene quer zur Zahnbürstenlängsachse (23) liegen.

7. Handteil nach einem der vorhergehenden Ansprüche, wobei die Federeinrichtung bezüglich einer Bewegungsachse, die in eine Stocherbewegung des Bürstenkopfs (3) umsetzbar ist, eine härtere Federkonstante besitzt als bezüglich einer Bewegungsachse, die in eine Wischbewegung des Bürstenkopfs (3) entlang der Zahnflanken umsetzbar ist.

8. Handteil nach einem der vorhergehenden Ansprüche, wobei die Federeinrichtung (15) scheiben- und/oder plattenförmig ausgebildet ist und/oder sich in einer Ebene im wesentlichen senkrecht zur Zahnbürstenlängsachse (23) erstreckt.

9. Handteil nach einem der vorhergehenden Ansprüche, wobei der äußere Befestigungsabschnitt (20) der Federeinrichtung (15) aus einem Befestigungsträger, vorzugsweise -rahmen besteht, der in dem Gehäuse (5) einspannbar ist.

10. Handteil nach einem der vorhergehenden Ansprüche, wobei die Federeinrichtung (15) eine Orientierungscodierung (21) besitzt, durch die die Federeinrichtung (15) in einer vorbestimmten Ausrichtung im Gehäuse (5) montierbar ist.

11. Handteil nach einem der vorhergehenden Ansprüche, wobei Befestigungsabschnitte (17, 20) zur Befestigung der Federeinrichtung (15) an dem Antrieb (6) und/oder dem Gehäuse (5) integral einstückig an der Federeinrichtung (15) angeformt sind.

12. Handteil nach einem der vorhergehenden Ansprüche, wobei die Federeinrichtung (15) ein Blechstanzteil bildet.

13. Handteil nach einem der vorhergehenden Ansprüche, wobei der Übertrager (7) und/oder der Antrieb (6) durch ein Lager (10), vorzugsweise eine elastische Hülse, mehrachsig schwenkbar an dem Gehäuse (5) angelenkt ist.

14. Handteil nach einem der vorhergehenden Ansprüche, wobei der Übertrager (7) an einem stirnseitigen Durchtrittsöffnungs- und/oder einem Endabschnitt des Gehäuses (5) angelenkt ist.

15. Handteil nach einem der beiden vorhergehenden Ansprüche, wobei die Federeinrichtung (15) auf der dem Lager (10) gegenüberliegenden Seite des Antriebs (6) vorgesehen ist.

16. Handteil nach einem der vorhergehenden Ansprüche, wobei der Übertrager (7) mit dem Antrieb (6) starr verbunden ist.

17. Handteil nach einem der vorhergehenden Ansprüche, wobei der Antrieb (6) einen Elektromotor (13) mit einer Unwucht (14) aufweist.

18. Handteil nach einem der vorhergehenden Ansprüche, wobei die Federeinrichtung (15) mit dem Antrieb (6) und/oder einem Antriebschassis (11) kraft- und/oder formschlüssig verbunden, insbesondere vernietet ist.

19. Handteil nach einem der vorhergehenden Ansprüche, wobei eine Stromversorgung des Antriebs (6) und/oder eine Steuervorrichtung für den Antrieb (6) zumindest eine gehäusefeste Anschlussstelle zum Anschließen des beweglich gelagerten Antriebs (6) in unmittelbarer Nähe eines Anlenkpunktes des Übertragers (7) und/oder des Antriebs (6) am Gehäuse (5) aufweist.

20. Handteil nach dem vorhergehenden Anspruch, wobei die Anschlüsse des Antriebs (6) über Flachbänder, vorzugsweise Blechstreifen (27), mit den gehäusefesten Anschlüssen verbunden sind.

21. Elektrische Zahnbürste mit einem Handteil nach einem der vorhergehenden Ansprüche.

22. Elektrische Zahnbürste nach Anspruch 21, wobei die Federeinrichtung (15) ihre härtere Federkonstante in einer Bewegungsrichtung im wesentlichen parallel zu einer Hauptlängsrichtung der Borsten der Zahnbürste und ihre weichere Federkonstante quer zu dieser Hauptlängsrichtung hat.

## Claims

1. A hand part of an electric toothbrush (1) having a housing (5), a drive (6) that is elastically mounted on the housing (5) by means of a spring device (15) and can be moved in an oscillatory fashion in at least one plane of motion, preferably transverse to the longitudinal axis (23) of the toothbrush, and having a transformer element (7) that is connected to the drive (6) to transmit the driving motion to a brush head (3), wherein the spring device (15) has different spring constants in two different directions of the aforementioned plane of motion of the drive (6), such that the oscillatory motion of the brush head (3) has different amplitudes in these directions, **characterized in that** the spring device (15) has a central mounting section (17), which is coupled by means of two essentially L-shaped spring arms (18, 19) at an outer mounting section (20), and wherein the two limbs of each spring arm (18, 19) have different lengths.

2. The hand part according to the preceding claim, wherein the spring device (15) and the driving frequency of the drive (6) are adapted to one another in such a way that the brush head (3) carries out an elliptical driving motion.

3. The hand part according to the preceding claim, wherein the drive (6) can be moved along an elliptical motion path, whose longitudinal axis is at least five times, preferably more than ten times longer, than the lateral axis.

4. The hand part according to any one of the preceding claims, wherein the drive (6) has adjusting means for adjusting its drive frequency, preferably an adjustable voltage stabilization circuit.

5. The hand part according to any one of the preceding claims, wherein the driving motion of the drive (6) has a lower amplitude in the direction of an in-and-out motion of the brush head (3) than in a lateral direction extending perpendicular thereto.

6. The hand part according to any one of the preceding claims, wherein the spring device (15) has two principal axes with different spring constants that both lie in a plane extending transverse to the longitudinal axis (23) of the toothbrush.

7. The hand part according to any one of the preceding claims, wherein the spring device has a harder spring constant along an axis of motion, along which the in-and-out motion of the brush head (3) is carried out, than along an axis of motion, along which the back-and-forth motion of the brush head (3) is carried out parallel to the sides of the teeth.

8. The hand part according to any one of the preceding claims, wherein the spring device (15) is realized in a disk-shaped and/or plate-shaped fashion and/or extends in a plane that essentially lies perpendicular to the longitudinal axis (23) of the toothbrush.

9. The hand part according to any one of the preceding claims, wherein the outer mounting section (20) of the spring device (15) comprises a mounting carrier, preferably a mounting frame, that can be clamped in the housing (5).

10. The hand part according to any one of the preceding claims, wherein the spring device (15) has an orientation coding (21), such that the spring device (15) can be installed in the housing (5) in a predetermined alignment.

11. The hand part according to any one of the preceding claims, wherein the spring device (15) has integral mounting sections (17, 20) for mounting the spring device (15) on the drive (6) and/or the housing (5).

12. The hand part according to any one of the preceding claims, wherein the spring device (15) is formed by a sheet metal stamping.

13. The hand part according to any one of the preceding claims, wherein the transformer element (7) and/or the drive (6) is coupled to the housing (5) in a multiaxially pivoting fashion, preferably by means of an elastic sleeve.

14. The hand part according to any one of the preceding claims, wherein the transformer element (7) is coupled to a through-opening section situated on a face and/or an end section of the housing (5).

15. The hand part according to one of the two preceding claims, wherein the spring device (15) is arranged on the side of the drive (6) that lies opposite of the bearing (10).

16. The hand part according to any one of the preceding claims, wherein the transformer element (7) is rigidly connected to the drive (6).

17. The hand part according to any one of the preceding claims, wherein the drive (6) has an electric motor (13) with an imbalance (14).

18. The hand part according to any one of the preceding claims, wherein the spring device (15) is connected by a non-positive and/or positive fit, particularly riveted, to the drive (6) and/or a drive chassis (11).

19. The hand part according to any one of the preceding claims, wherein a power supply of the drive (6) and/or a control means for the drive (6) has at least one rigid connecting point on the housing to connect the movably supported drive (6) in the immediate vicinity of a coupling point of the transformer element (7) and/or the drive (6) on the housing (5).

20. The hand part according to the preceding claim, wherein the connections of the drive (6) are connected to the rigid connections on the housing by means of flat strips, preferably sheet metal strips (27).

21. An electric toothbrush having a hand part according to any one of the preceding claims.

22. The electric toothbrush according to Claim 21, wherein the spring device (15) has its harder spring constant along an axis of motion that is essentially parallel to the principal longitudinal direction of the bristles of the toothbrush and its softer spring constant transverse to this principal longitudinal direction.

## Revendications

1. Partie manuelle d'une brosse à dents électrique (1) ayant un logement (5), un entraînement (6) qui est monté élastiquement sur le logement (5) au moyen d'un dispositif à ressort (15) et peut être déplacé d'une façon oscillatoire dans au moins un plan de mouvement, de préférence transversal à l'axe longitudinal (23) de la brosse à dents, et ayant un élément transformateur (7) qui est relié à l'entraînement (6) pour transmettre le mouvement d'entraînement à une tête de brosse (3), dans laquelle le dispositif à ressort (15) a différentes constantes de ressort dans deux directions différentes du plan de mouvement susmentionné de l'entraînement (6), de telle sorte que le mouvement oscillatoire de la tête de brosse (3) a différentes amplitudes dans ces directions, **caractérisée en ce que** le dispositif à ressort (15) a une section de montage centrale (17), qui est couplée au moyen de deux bras de ressort pratiquement en forme de L (18, 19) au niveau d'une section de montage externe (20), et dans laquelle les deux membres de chaque bras de ressort (18, 19) ont différentes longueurs.

2. Partie manuelle selon la revendication précédente, dans laquelle le dispositif à ressort (15) et la fréquence d'entraînement de l'entraînement (6) sont adaptés l'un à l'autre d'une manière telle que la tête de brosse (3) effectue un mouvement d'entraînement elliptique.

3. Partie manuelle selon la revendication précédente, dans laquelle l'entraînement (6) peut être déplacé le long d'une trajectoire de mouvement elliptique, dont l'axe longitudinal est au moins cinq fois, de préférence plus de dix fois plus long, que l'axe latéral.

4. Partie manuelle selon l'une quelconque des revendications précédentes, dans laquelle l'entraînement (6) a un moyen d'ajustement pour ajuster sa fréquence d'entraînement, de préférence un circuit de stabilisation de tension réglable.

5. Partie manuelle selon l'une quelconque des revendications précédentes, dans laquelle le mouvement d'entraînement de l'entraînement (6) a une amplitude plus basse dans la direction d'un mouvement vers l'intérieur et l'extérieur de la tête de brosse (3) que dans une direction latérale s'étendant perpendiculaire à celle-ci.

6. Partie manuelle selon l'une quelconque des revendications précédentes, dans laquelle le dispositif à ressort (15) a deux axes principaux avec différentes constantes de ressort qui se trouvent l'un et l'autre dans un plan s'étendant transversal à l'axe longitudinal (23) de la brosse à dents.

7. Partie manuelle selon l'une quelconque des revendications précédentes, dans laquelle le dispositif à ressort a une constante de ressort plus dure le long d'un axe de mouvement, le long duquel le mouvement vers l'intérieur et l'extérieur de la tête de brosse (3) est effectué, que le long d'un axe de mouvement, le long duquel le mouvement d'aller et retour de la tête de brosse (3) est effectué parallèle aux côtés des dents.

8. Partie manuelle selon l'une quelconque des revendications précédentes, dans laquelle le dispositif à ressort (15) est réalisé d'une façon en forme de disque et/ou en forme de plaque et/ou s'étend dans un plan qui se trouve pratiquement perpendiculaire à l'axe longitudinal (23) de la brosse à dents.

9. Partie manuelle selon l'une quelconque des revendications précédentes, dans laquelle la section de montage externe (20) du dispositif à ressort (15) comprend un support de montage, de préférence un cadre de montage, qui peut être clampé dans le logement (5).

10. Partie manuelle selon l'une quelconque des revendications précédentes, dans laquelle le dispositif à ressort (15) a un codage d'orientation (21), de telle sorte que le dispositif à ressort (15) peut être installé dans le logement (5) dans un alignement prédéterminé.

11. Partie manuelle selon l'une quelconque des revendications précédentes, dans laquelle le dispositif à ressort (15) a des sections de montage d'un seul tenant (17, 20) pour un montage du dispositif à ressort (15) sur l'entraînement (6) et/ou le logement (5).

12. Partie manuelle selon l'une quelconque des revendications précédentes, dans laquelle le dispositif à ressort (15) est formé par un estampage de tôle métallique.

13. Partie manuelle selon l'une quelconque des revendications précédentes, dans laquelle l'élément transformateur (7) et/ou l'entraînement (6) sont couplés au logement (5) d'une façon pivotant en sens multiaxial, de préférence au moyen d'un manchon élastique.

14. Partie manuelle selon l'une quelconque des revendications précédentes, dans laquelle l'élément transformateur (7) est couplé à une section à ouverture passante située sur une face et/ou une section extrême du logement (5).

15. Partie manuelle selon l'une des deux revendications précédentes, dans laquelle le dispositif à ressort (15) est arrangé sur le côté de l'entraînement (6) qui se trouve opposé au palier (10).

16. Partie manuelle selon l'une quelconque des revendications précédentes, dans laquelle l'élément transformateur (7) est relié de façon rigide à l'entraînement (6).

17. Partie manuelle selon l'une quelconque des revendications précédentes, dans laquelle l'entraînement (6) a un moteur électrique (13) avec un déséquilibre (14).

18. Partie manuelle selon l'une quelconque des revendications précédentes, dans laquelle le dispositif à ressort (15) est relié par un ajustement non positif et/ou positif, en particulier riveté, à l'entraînement (6) et/ou un châssis d'entraînement (11).

19. Partie manuelle selon l'une quelconque des revendications précédentes, dans laquelle une alimentation de l'entraînement (6) et/ou un moyen de contrôle pour l'entraînement (6) a au moins un point de raccordement rigide sur le logement pour relier l'entraînement (6) supporté de manière mobile au voisinage immédiat d'un point de couplage de l'élément transformateur (7) et/ou de l'entraînement (6) sur le logement (5).

20. Partie manuelle selon la revendication précédente, dans laquelle les raccordements de l'entraînement (6) sont reliés aux raccordements rigides sur le logement au moyen de bandes plates, de préférence des bandes en tôle métallique (27).

21. Brosse à dents électrique ayant une partie manuelle selon l'une quelconque des revendications précédentes.

22. Brosse à dents électrique selon la revendication 21, dans laquelle le dispositif à ressort (15) a sa constante de ressort plus dure le long d'un axe de mouvement qui est pratiquement parallèle à la direction longitudinale principale des poils de la brosse à dents et sa constante de ressort plus molle transversale à cette direction longitudinale principale.
